# EUROPEAN PATENT SPECIFICATION

(11) **EP 4 385 866 B1**
(45) Date of publication and mention of the grant of the patent: **11.06.2025**
(21) Application number: 23204593.0
(22) Date of filing: 19.10.2023
(51) Int. Cl.: B62D 49/06, B60K 7/00, B60K 1/04, B62D 21/02

(54) **ELECTRICALLY-POWERED TOWING TRACTOR**
ELEKTRISCH ANGETRIEBENER SCHLEPPER
TRACTEUR DE REMORQUAGE À PROPULSION ÉLECTRIQUE

(30) Priority: 14.12.2022 IT 202200025548
(43) Date of publication of application: 19.06.2024
(73) Proprietor: Toyota Material Handling Manufacturing Italy S.p.A, 40132 Bologna (IT)
(72) Inventor: PESSO, Tommaso, 44028 Poggio Renatico (Ferrara) (IT)
(74) Representative: Hoffmann Eitle

(56) References cited:
- EP-A2- 2 684 775
- CN-A- 113 276 969
- CN-A- 114 394 166
- CN-A- 114 954 708
- KR-A- 20220 157 763
- NL-C2- 1 040 561

## Description

### Technical Field

The present invention relates to a towing tractor, more specifically a battery-driven towing tractor.

### Background

Recently, the demand for towing tractors that are battery-powered is more and more increasing. According to a known art, lithium battery assemblies can be installed on the towing tractor in a substantially permanent manner, so that the battery is not replaced during normal operation. See for example DE12548986546.

In order to achieve a satisfactorily long reach and power, rather bulky and heavy lithium battery assemblies are necessary, in case of battery assemblies that are permanently mounted on the tractor; accordingly, the frame of the towing tractor must be dimensioned and designed to support the stresses induced by the weight of the batteries, in addition to the usual forces that are caused by the operation for towing tractor, such as the stresses induced by the trailers and, more in general, to the loads that are carried by the towing tractor. Accordingly, the structure and the frame of the towing tractor must be manufactured with a suitable dimensioning of the frame parts, this leading to an increase in the cost and a complex design.

There is therefore a need for improvement that may allow to reduce the complexity of the structure of the electrically-powered towing tractor and to possibly save manufacturing costs and material usage, while achieving a satisfactorily long range and power.

### Summary

The mentioned problems are solved by the subject-matter of the main claim. Further preferred embodiments are defined in the dependent claims. Specifically, the embodiments of the present invention may provide substantial benefits that are described in part herein.

According to an embodiment of the present invention, there is provided an electrically-powered towing tractor including:
- a counterweight,
- coupling means configured for connecting a trailer to the towing tractor,
- a front frame portion, and
- a battery assembly comprising a housing that forms a recess for receiving one or more battery cells,

characterized in that the towing tractor further comprises two longitudinal members located on opposite lateral sides of the housing, wherein the two longitudinal members (14) are connected to the counterweight (11) by means of releasable fastening means,
wherein the longitudinal members connect the counterweight and the front frame portion on opposite lateral sides of the electrically-powered towing tractor and are configured to transfer forces between the counterweight and the front frame portion during operation of the electrically-powered towing tractor.

### Brief description of the drawings

Embodiments of the present invention, which are presented for better understanding the inventive concepts but which are not to be seen as limiting the invention, will now be described with reference to the figures in which:
Figure 1 shows a view of a towing tractor according to an embodiment of the invention;
Figure 2 shows a view of the towing tractor, in which the cabin as well as the battery assembly are removed;
Figure 3 shows a view of the towing tractor, in which the cabin is removed and the battery assembly is shown mounted onto the longitudinal members of the towing tractor.

### Detailed description

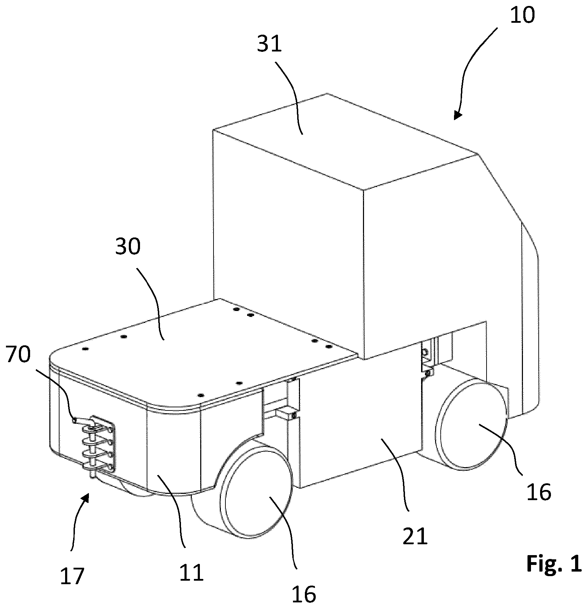

In figure 1 a towing tractor 10 is shown including a counterweight 11 on the rear side. The towing tractor 10 may include a user cabin 31 on the front of the vehicle. The towing tractor 10 may include four wheels 16. The towing tractor 10 may include a loading surface formed by a panel 30 positioned between the cabin 31 and the rear end of the towing tractor 10. The towing tractor 18 includes coupling means 17 for connecting a trailer to the towing tractor. Preferably, the counterweight may be formed as a single piece, more preferably a single piece made of cast iron. Preferably, the coupling means 17 may be mounted directly on the counterweight 11 as shown in figure 1. The coupling means may include a vertical plate fixed to the counterweight 11 and one or more perforated plates protruding from the vertical plate, each of the one or more perforated plates forming a hole for receiving a connecting pin 70 for connecting the trailer (not shown) to the towing tractor 10. The vertical plane of the coupling means 17 may be advantageously screwed to the rear part of the counterweight 11, e.g. to a substantially vertical rear surface of the counterweight 11.

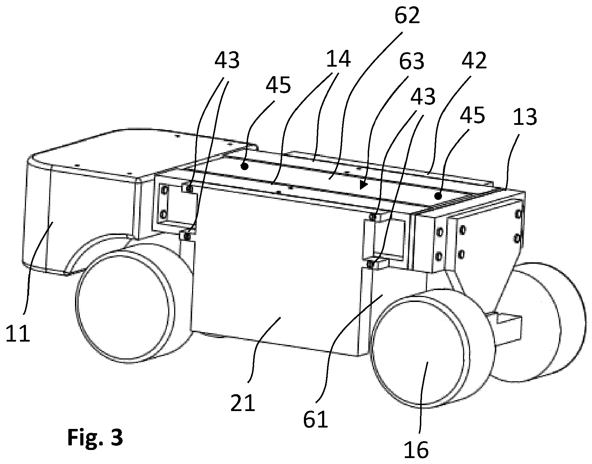

The towing tractor 10 is electrically-powered and includes a battery assembly, e.g. configured to feed electrical power to an electrical traction motor of the towing tractor. The battery assembly may include a housing 62 that forms a recess 63 for receiving one or more battery cells (see figure 3); the battery cells may include lithium battery elements or cells. The housing 62 may form part of a central battery module 61 of the towing tractor that includes the housing and the battery cells inside the housing 62; in other words, the housing 62 may form the outer shell of the central battery module 61. In a preferred embodiment, the battery assembly may additionally include one or two lateral battery modules 21 and 42 (see figure 3), in addition to the central battery module 61; preferably, the battery modules 21 and 42 may include lithium battery elements or cells, as well.

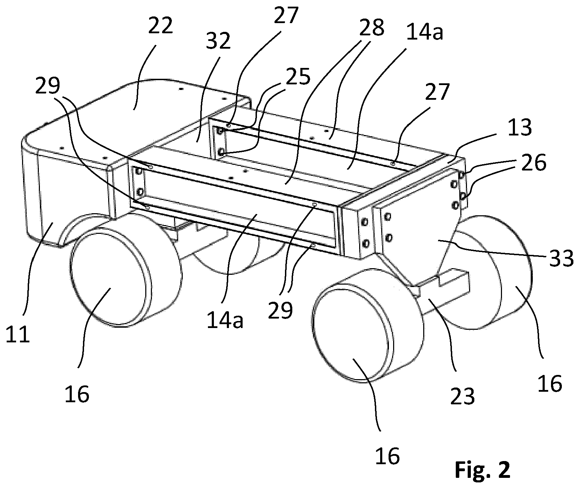

As shown in figures 2 and 3, the towing tractor 10 includes a front frame portion 13. The front frame portion 13 forms part of, or supports, a front axle structure. For example, the front frame portion 13 may support a frame element 33 that in turn is connected to the axle 23 onto which the front wheels 16 are mounted (see figure 2).

The towing tractor 10 includes two longitudinal members 14 located on opposite lateral sides of the housing 62 of the battery assembly. The two longitudinal members 14 are connected to the counterweight 11 by means of releasable fastening means 25, e.g. by means of screws. Preferably, each longitudinal member 14 is fixed to the counterweight by means of two or four screws. Preferably, each longitudinal member 14 is fixed to the counterweight 11 at a substantially vertical surface 32 of the counterweight facing towards the front frame portion 13. The longitudinal members 14 connect the counterweight 11 and the front frame portion 13 on opposite lateral sides of the electrically-powered towing tractor and are configured to transfer forces between the counterweight 11 and the front frame portion 13 during operation of the electrically-powered towing tractor. In other words, the longitudinal members 14 are configured and designed to withstand the forces that must be transferred from the front frame portion 13 to the counterweight 11 during the normal operation of the tractor, due for example to stresses induced by the trailers via the coupling means, the load on the loading surface 30 or the driving of the tractor while transporting a load. The panel 30, the counterweight 11 and the longitudinal members 14 are such to define a loading plane. In other words, above the panel 30 a load can be carried by the towing tractor. The panel 30 is fixed directly to the longitudinal members 14 and to the counterweight 11.

Similar to the connection to the counterweight 11, the longitudinal members 14 may be fixed to the front frame portion 13 by means of releasable fastening means 26, such as screws. For example, each longitudinal member may be fixed to the front frame part 13 by means of two or four screws 26.

The longitudinal members 14 are dimensioned to withstand the operational stresses transferred between the front axle on the one hand, and the counterweight 11 on the other hand. As shown above, the longitudinal members 14 are fixed to the counterweight 11 and to the front portion 13 of the frame by means of releasable fastening means. This allows to manufacture towing tractors of different sizes while using always the same design for the counterweight and the front frame portion, by simply preparing battery assemblies of different size in the longitudinal direction. Hence, different wheel bases can be achieved in a cost-effective manner.

Preferably, the longitudinal members 14 include flanges at opposite ends that are joined to the counterweight 11 and the front frame portion 13, respectively, by means of the releasable fastening means 25, 26.

The housing 62 of the battery assembly includes two opposite lateral walls, a first one of said two opposite lateral walls being fixed to a first one of the two longitudinal members 14 and a second one of said two opposite lateral walls being fixed to a second one of the two longitudinal members 14. The housing 62 is positioned between the counterweight 11 and front frame portion 13. The housing 62 is configured to support the weight of the battery cells during operation of the tractor 10. The housing 62 can have a box-like shape and can be made of metal sheets.

The longitudinal members 14 are substantially parallel. The longitudinal members 14 have a beam-like structure. Preferably, the longitudinal members 14 are formed with a C-shaped cross section or a H-shaped cross section. The longitudinal members 14 preferably includes a central plate portion 14a (see figure 2) that in use is positioned substantially in a vertical plane. The longitudinal members include further an upper plate portion 28 that in use is positioned substantially in a horizontal plane. The longitudinal members may further include a lower plate portion that in use is positioned substantially in a horizontal plane, wherein the central plate portion 14a connects the upper and lower plate portions of each longitudinal member.

The two opposite lateral sides (or walls) of the housing 62 are substantially vertical and contact the longitudinal members 14. The lateral sides of the housing 15 are fixed to the longitudinal members 14 by means of fastening means 45, e.g. releasable fastening means, such as by nut and bolt, or a screw. Preferably, each lateral wall of the housing 62 is fixed to a respective longitudinal member 14 by means of two fastening means, e.g. two screws, or four screws. The longitudinal members 14 may include corresponding holes 27 for receiving the fastening means 45 on a lateral side thereof.

In a preferred embodiment, the surface of the battery assembly facing downwards is not in contact with parts of a frame of the towing tractor 10. In other words, the weight of the battery assembly is not supported by portions of the frame of the towing tractor positioned under the battery assembly. Thus, the lower part of the housing 62 is not supported by a frame portion. In a preferred embodiment, the lower part of housing 62 extends downwardly at a height below the longitudinal members 14. The lower part of housing 62 may also extend downwardly at a height below the counterweight 11. This structure of the battery assembly allows to reduce the usage of material while achieving a suitable robustness of the towing tractor to withstand operational stresses. The weight of the battery assembly is supported by the connection of the longitudinal members 14 to the counterweight 11 and the front frame portion 13. The housing 62 and the battery cells contained in the housing 62 are fully supported laterally by the longitudinal members 14. Hence, the space available for the battery assembly is increased, as the battery assembly can extend downwardly relatively close to ground. This allows to increase in turn the space available for the battery cells and, hence, to increase the reach and the power of the towing tractor.

As well shown in figure 2, the longitudinal members 14 may preferably have a substantially horizontal orientation. The rear ends of the longitudinal members 14 that are connected to the counterweight 11 are located at a height entirely above rear wheels of the towing tractor. The front ends of the longitudinal members 14 that are connected to the front frame part 13 are at a height entirely above the front wheels of the towing tractor. This configuration may contribute to achieve suitable mechanical robustness and material savings.

Although detailed embodiments have been described above, these only serve to provide a better understanding of the invention defined by the independent claims and are not to be seen as limiting.

The battery assembly may include a lateral battery module 21 or 42 mounted between one of the longitudinal members 14 and a lateral cover element (not shown) of the towing tractor configured to protect the lateral battery module 21 or 42 from external agents. In figure 3, the lateral battery modules 21 and 42 are shown on opposite lateral sides of the towing tractor. The lateral cover elements may be absent, in this case the lateral battery element 21, 42 is simply mounted to a corresponding longitudinal member 14 on an opposite side with respect to the housing 62. The lateral battery assembly 21 includes a housing connected to longitudinal member 14 by means of releasable fastening means 43, e.g. screws. The housing of the lateral battery assembly 21 may include four arms protruding in a horizontal direction, two on each one of opposite sides of the housing, wherein each of the arms carries a fastening mean for fixing the lateral battery module to the longitudinal member 14. In the example of figure 3, four screws 43 are used to fix the lateral battery assembly 21 directly to the longitudinal member 14. The screws may engage in corresponding holes 29 formed on the longitudinal member 14 (see figure 2). The other lateral battery module 41 may have a similar configuration and attachment to the other longitudinal member 14. Alternatively, instead of including four arms, the housing of the lateral battery module may include only two arms, each one on opposite sides of the lateral battery module. The number of arms could also be different. This allows to improve the connection between the lateral battery module and the longitudinal member.

Alternative embodiments of the invention can be conceived without departing from the scope of the claims.

## Claims

1. An electrically-powered towing tractor (10) including:
- a counterweight (11),
- coupling means (17) configured for connecting a trailer to the towing tractor,
- a front frame portion (13), and
- a battery assembly comprising a housing (62) that forms a recess (63) for receiving one or more battery cells,
**characterized in that** the towing tractor further comprises two longitudinal members (14) located on opposite lateral sides of the housing (62), wherein the two longitudinal members (14) are connected to the counterweight (11) by means of releasable fastening means (25), wherein the longitudinal members (14) connect the counterweight (11) and the front frame portion (13) on opposite lateral sides of the electrically-powered towing tractor and are configured to transfer forces between the counterweight (11) and the front frame portion (13) during operation of the electrically-powered towing tractor.

2. A towing tractor according to claim 1, wherein the housing (62) of the battery assembly (61) includes two opposite lateral walls, a first one of said two opposite lateral walls being fixed to a first one of the two longitudinal members (14) and a second one of said two opposite lateral walls being fixed to a second one of the two longitudinal members (14).

3. A towing tractor according to any of the preceding claims, wherein the longitudinal members (14) are fixed to the front frame portion (13) by means of releasable fastening means (26).

4. A towing tractor according to claim 3, wherein the longitudinal members (14) include flanges at opposite ends that are joined to the counterweight (11) and the front frame portion (13), respectively.

5. A towing tractor according to any of the preceding claims, wherein the lateral walls of the housing (62) are fixed to the longitudinal members (14) by means of releasable fastening means (45).

6. A towing tractor according to any of claims 1-5, wherein a lower part of housing (62) extends downwardly at a height below the longitudinal members (14).

7. A towing tractor according any of the preceding claims, wherein the battery assembly includes a lateral battery module (21) mounted on one of the longitudinal members on a side of the longitudinal member (14) opposite to the housing (62) mounted between the two longitudinal members (14), wherein the lateral battery assembly (21) includes a housing connected to longitudinal member (14) by means of a releasable fastening means (43).

8. A towing tractor according to claim 7, wherein the housing of the lateral battery assembly (21) includes at least two arms protruding in a horizontal direction, each one of the arms on opposite sides of the housing of the lateral battery assembly (21), wherein each of the arms carries a fastening means (43) for fixing the lateral battery module (21) to the longitudinal member (14).

9. A towing tractor according to any of the preceding claims, wherein the rear ends of the longitudinal members (14) that are connected to the counterweight (11) are located at a height entirely above rear wheels of the towing tractor and the front ends of the longitudinal members (14) that are connected to the front frame portion are at a height entirely above front wheels of the towing tractor.

10. A towing tractor according to any of the preceding claims, wherein an upper surface (28) of each of the longitudinal members (14) is substantially horizontal, an upper surface (22) of the counterweight is substantially horizontal and, the upper surfaces of the longitudinal members and of the counterweight are substantially at the same height.

11. A towing tractor according to any of the preceding claims, wherein the counterweight (11) is a single piece made of cast iron and wherein the coupling means (17) are mounted directly on the counterweight.

## Patentansprüche

1. Elektrisch angetriebener Schlepper (10), die Folgendes einschließt:
- ein Gegengewicht (11),
- Kupplungsmittel (17), die für die Verbindung eines Anhängers mit dem Schlepper ausgelegt sind,
- einem vorderen Rahmenabschnitt (13), und
- eine Batterieanordnung, die ein Gehäuse (62) umfasst, das eine Aussparung (63) zur Aufnahme einer oder mehrerer Batteriezellen bildet,
**dadurch gekennzeichnet, dass** der Schlepper weiter zwei längliche Elemente (14) umfasst, die auf gegenüberliegenden seitlichen Seiten des Gehäuses (62) angeordnet sind, wobei die beiden länglichen Elemente (14) mittels lösbarer Befestigungsmittel (25) mit dem Gegengewicht (11) verbunden sind, wobei die länglichen Elemente (14) das Gegengewicht (11) und den vorderen Rahmenabschnitt (13) auf gegenüberliegenden seitlichen Seiten des elektrisch angetriebenen Schleppers verbinden und so konfiguriert sind, dass sie während des Betriebs des elektrisch angetriebenen Schleppers Kräfte zwischen dem Gegengewicht (11) und dem vorderen Rahmenabschnitt (13) übertragen.

2. Schlepper nach Anspruch 1, wobei das Gehäuse (62) der Batterieanordnung (61) zwei gegenüberliegende seitliche Seitenwände einschließt, wobei eine erste der beiden gegenüberliegenden seitlichen Seitenwände an einem ersten der beiden länglichen Elemente (14) befestigt ist und eine zweite der beiden gegenüberliegenden seitlichen Seitenwände an einem zweiten der beiden länglichen Elemente (14) befestigt ist.

3. Schlepper nach einem der vorstehenden Ansprüche, wobei die länglichen Elemente (14) mittels lösbarer Befestigungsmittel (26) an dem vorderen Rahmenabschnitt (13) befestigt sind.

4. Schlepper nach Anspruch 3, wobei die länglichen Elemente (14) an gegenüberliegenden Enden Flansche einschließen, die mit dem Gegengewicht (11) bzw. dem vorderen Rahmenabschnitt (13) verbunden sind.

5. Schlepper nach einem der vorstehenden Ansprüche, wobei die seitlichen Seitenwände des Gehäuses (62) mittels lösbarer Befestigungsmittel (45) an den länglichen Elementen (14) befestigt sind.

6. Schlepper nach einem der Ansprüche 1 bis 5, wobei sich ein unterer Teil des Gehäuses (62) in einer Höhe unterhalb der länglichen Elemente (14) nach unten erstreckt.

7. Schlepper nach einem der vorstehenden Ansprüche, wobei die Batterieanordnung ein seitliches Batteriemodul (21) einschließt, das an einem der länglichen Elemente auf einer Seite des länglichen Elements (14) gegenüber dem Gehäuse (62) angeordnet ist, das zwischen den beiden länglichen Elementen (14) angeordnet ist, wobei die seitliche Batterieanordnung (21) ein Gehäuse einschließt, das mit einem länglichen Element (14) mittels eines lösbaren Befestigungsmittels (43) verbunden ist.

8. Schlepper nach Anspruch 7, wobei das Gehäuse der seitlichen Batterieanordnung (21) mindestens zwei Arme einschließt, die in horizontaler Richtung vorstehen, wobei sich jeder der Arme auf gegenüberliegenden Seiten des Gehäuses der seitlichen Batterieanordnung (21) befindet, wobei jeder der Arme ein Befestigungsmittel (43) zur Befestigung des seitlichen Batteriemoduls (21) an dem länglichen Element (14) trägt.

9. Schlepper nach einem der vorstehenden Ansprüche, wobei die hinteren Enden der länglichen Elemente (14), die mit dem Gegengewicht (11) verbunden sind, sich auf einer Höhe befinden, die vollständig über den Hinterrädern des Schleppers liegt und die vorderen Enden der länglichen Elemente (14), die mit dem vorderen Rahmenabschnitt verbunden sind, sich auf einer Höhe befinden, die vollständig über den Vorderrädern des Schleppers liegt.

10. Schlepper nach einem der vorstehenden Ansprüche, wobei eine obere Fläche (28) jedes der länglichen Elemente (14) im Wesentlichen horizontal ist, eine obere Fläche (22) des Gegengewichts im Wesentlichen horizontal ist und die oberen Flächen der länglichen Elemente und des Gegengewichts im Wesentlichen auf der gleichen Höhe liegen.

11. Schlepper nach einem der vorstehenden Ansprüche, wobei das Gegengewicht (11) aus einem einzigen Stück aus Gusseisen besteht, und wobei die Kupplungsmittel (17) direkt am Gegengewicht angebracht sind.

## Revendications

1. Tracteur de remorquage à propulsion électrique (10) incluant :
- un contrepoids (11),
- des moyens de couplage (17) configurés pour raccorder une remorque au tracteur de remorquage,
- une partie de châssis avant (13), et
- un ensemble batterie comprenant un logement (62) qui forme un évidement (63) pour recevoir une ou plusieurs cellules de batterie,
**caractérisé en ce que** le tracteur de remorquage comprend en outre deux éléments longitudinaux (14) situés sur des côtés latéraux opposés du logement (62), dans lequel les deux éléments longitudinaux (14) sont raccordés au contrepoids (11) au moyen de moyens d'attache libérables (25), dans lequel les éléments longitudinaux (14) raccordent le contrepoids (11) et la partie de châssis avant (13) sur des côtés latéraux opposés du tracteur de remorquage à propulsion électrique et sont configurés pour transférer des forces entre le contrepoids (11) et la partie de châssis avant (13) durant le fonctionnement du tracteur de remorquage à propulsion électrique.

2. Tracteur de remorquage selon la revendication 1, dans lequel le logement (62) de l'ensemble batterie (61) inclut deux parois latérales opposées, une première desdites deux parois latérales opposées étant fixée à un premier des deux éléments longitudinaux (14) et une seconde desdites deux parois latérales opposées étant fixée à un second des deux éléments longitudinaux (14).

3. Tracteur de remorquage selon l'une quelconque des revendications précédentes, dans lequel les éléments longitudinaux (14) sont fixés à la partie de châssis avant (13) au moyen de moyens d'attache libérables (26).

4. Tracteur de remorquage selon la revendication 3, dans lequel les éléments longitudinaux (14) incluent des rebords aux extrémités opposées qui sont jointes au contrepoids (11) et à la partie de châssis avant (13), respectivement.

5. Tracteur de remorquage selon l'une quelconque des revendications précédentes, dans lequel les parois latérales du logement (62) sont fixées aux éléments longitudinaux (14) au moyen de moyens d'attache libérables (45).

6. Tracteur de remorquage selon l'une quelconque des revendications 1 à 5, dans lequel une partie inférieure de logement (62) s'étend vers le bas à une hauteur inférieure aux éléments longitudinaux (14).

7. Tracteur de remorquage selon l'une quelconque des revendications précédentes, dans lequel l'ensemble batterie inclut un module de batterie latéral (21) monté sur un des éléments longitudinaux sur un côté de l'élément longitudinal (14) opposé au logement (62) monté entre les deux éléments longitudinaux (14), dans lequel l'ensemble batterie latéral (21) inclut un logement raccordé à un élément longitudinal (14) au moyen d'un moyen d'attache libérable (43).

8. Tracteur de remorquage selon la revendication 7, dans lequel le logement de l'ensemble batterie latéral (21) inclut au moins deux bras faisant saillie dans une direction horizontale, chacun des bras se trouvant sur des côtés opposés du logement de l'ensemble batterie latéral (21), dans lequel chacun des bras porte un moyen d'attache (43) pour fixer le module de batterie latéral (21) à l'élément longitudinal (14).

9. Tracteur de remorquage selon l'une quelconque des revendications précédentes, dans lequel les extrémités arrière des éléments longitudinaux (14) qui sont raccordés au contrepoids (11) sont situées à une hauteur entièrement supérieure aux roues arrière du tracteur de remorquage et les extrémités avant des éléments longitudinaux (14) qui sont raccordés à la partie de châssis avant sont à une hauteur entièrement supérieure aux roues avant du tracteur de remorquage.

10. Tracteur de remorquage selon l'une quelconque des revendications précédentes, dans lequel une surface supérieure (28) de chacun des éléments longitudinaux (14) est substantiellement horizontale, une surface supérieure (22) du contrepoids est substantiellement horizontale, et les surfaces supérieures des éléments longitudinaux et du contrepoids sont substantiellement à la même hauteur.

11. Tracteur de remorquage selon l'une quelconque des revendications précédentes, dans lequel le contrepoids (11) est une pièce unique fabriquée en fonte et dans lequel les moyens de couplage (17) sont montés directement sur le contrepoids.
